# EUROPEAN PATENT APPLICATION

(11) **EP 4 773 366 A1**
(43) Date of publication of application: **08.07.2026**
(21) Application number: 25223904.1
(22) Date of filing: 16.12.2025
(51) Int. Cl.: H01M 50/186, H01M 50/133, H01M 50/107, H01M 50/152, H01M 50/167, H01M 50/342, H01M 10/04, H01M 50/574

(54) **SECONDARY BATTERY AND METHOD OF MANUFACTURING SECONDARY BATTERY**

(30) Priority: 02.01.2025 KR 20250000142
(71) Applicant: SAMSUNG SDI CO., LTD., Yongin-si, Gyeonggi-do 17084 (KR)
(72) Inventor: JUNG, Meenkyoung, 17084 Yongin-si, Gyeonggi-do (KR); DOO, Jae Gyun, 17084 Yongin-si, Gyeonggi-do (KR); CHOI, Woosung, 17084 Yongin-si, Gyeonggi-do (KR); PARK, Seung-Young, 17084 Yongin-si, Gyeonggi-do (KR); BAK, Hyo-Rim, 17084 Yongin-si, Gyeonggi-do (KR); OH, Jungyeon, 17084 Yongin-si, Gyeonggi-do (KR)
(74) Representative: Bardehle Pagenberg Partnerschaft mbB Patentanwälte Rechtsanwälte

(57) **Abstract**

The present disclosure relates to a secondary battery and a method of manufacturing the secondary battery. The secondary battery includes a case having an opening formed therein and an electrode assembly accommodated in the case. The electrode assembly includes a first electrode, a separator, and a second electrode, with the first electrode being electrically connected to the case. A cap assembly seals an opening formed in the case and is electrically connected to the second electrode. A gasket is interposed between the case and the cap assembly. The cap assembly includes a protrusion extending upward along a perimeter of the cap assembly, and the case includes a crimping portion that surrounds the protrusion and fixes the cap assembly to the case.

## Description

### BACKGROUND

### 1. FIELD

The present disclosure relates to a secondary battery and a method of manufacturing the secondary battery.

### 2. DESCRIPTION OF THE RELATED ART

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Depending on its shape, a secondary battery may be a cylindrical secondary battery, a prismatic secondary battery, a pouch secondary battery, and the like. By way of example, a cylindrical secondary battery may include an electrode assembly that includes a positive electrode and a negative electrode, a case that accommodates the electrode assembly, and a cap assembly coupled to an upper portion of the case.

A typical cylindrical secondary battery may include a beading portion that is inwardly indented along the circumference of the case so as to fix the electrode assembly accommodated in the case and to mount the cap assembly on the upper portion of the case. However, the beading portion may interfere with discharge of the heat generated by the secondary battery during an abnormal event inside the secondary battery. As a result, an explosion may occur in a sidewall of the secondary battery.

The above information disclosed in this Background section is for enhancement of understanding of the background of the present disclosure, and therefore, it may contain information that does not constitute related (or prior) art.

### SUMMARY

Technical problems such as those described above are solved by a secondary battery and a method of manufacturing the secondary battery according to the present disclosure.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to an embodiment of the present disclosure to resolve the above technical problems, a secondary battery may include a case having an opening formed therein, an electrode assembly accommodated in the case, the electrode assembly including a first electrode, a separator, and a second electrode, with the first electrode being electrically connected to the case, a cap assembly that seals an opening formed in the case and is electrically connected to the second electrode, and a gasket interposed between the case and the cap assembly. The cap assembly may include a protrusion that extends upward along a perimeter, and the case may include a crimping portion that surrounds the protrusion and fixes the cap assembly to the case.

According to an embodiment, the protrusion may be formed radially inward from an outer diameter of the cap assembly such that a gap is formed between the protrusion and the outer diameter of the cap assembly.

According to an embodiment, the cap assembly may include a bent portion that is bent radially inward at an end of the protrusion.

According to an embodiment, the crimping portion may press the sidewall of the protrusion and fix the cap assembly to the case.

According to an embodiment, a thickness of the crimping portion that presses the sidewall of the protrusion may be thicker than other regions of the case.

According to an embodiment, an end of the crimping portion may be spaced from an upper surface of the cap assembly.

According to an embodiment, an end of the gasket may extend radially inward beyond the protrusion of the cap assembly and be placed on the upper surface of the cap assembly.

According to an embodiment, an end of the gasket may be interposed between one end of the crimping portion and the upper surface of the cap assembly.

According to an embodiment, the gasket may be disposed on a perimeter of the electrode assembly.

According to an embodiment, the secondary battery may further include a support member that is disposed between the electrode assembly and the gasket, with the support member supporting the gasket.

According to an embodiment, the cap assembly may include a vent is deformable by gas pressure, an upper cap disposed on an upper side of the vent and connected to an external terminal, a lower cap disposed on a lower side of the vent, an insulating layer disposed between the lower cap and the vent, and a sub-plate disposed below the lower cap and connected to the vent and the lower cap. The upper cap may include a protrusion that extends upward along a perimeter.

According to an embodiment, the vent may include a central portion that protrudes downward and contacts the sub-plate, and a rupture portion that is configured to rupture by pressure from a gas passing through a plurality of connection holes formed in the lower cap.

According to an embodiment, the lower cap may include an insertion hole formed in the lower cap, and the center portion of the vent is inserted into the insertion hole, and a plurality of connection holes are formed around the insertion hole.

According to an embodiment, the upper cap may include a plurality of exhaust holes configured to discharge the gas passing through the rupture portion of the vent that is configured to rupture by gas pressure.

According to an embodiment, the secondary battery may further include an upper insulating member that is disposed on a first surface of the electrode assembly and facing the cap assembly, and a lower insulating member that is disposed on a second surface of the electrode assembly and facing a bottom surface of the case.

According to another embodiment of the present disclosure, a method for manufacturing a secondary battery may include forming an electrode assembly including a first electrode, a separator, and a second electrode, forming a cap assembly that includes a protrusion extending upward along a perimeter, accommodating the electrode assembly in a case having an opening, providing a gasket and the cap assembly to the case, with the gasket surrounding an outer perimeter of the cap assembly including the protrusion, and forming a crimping portion in an upper end of the case to surround the protrusion of the cap assembly and fixes the cap assembly to the case.

According to an embodiment, the protrusion may be formed radially inward from an outer diameter of the cap assembly such that a gap is formed between the protrusion and the outer diameter of the cap assembly.

According to an embodiment, forming the crimping portion may include bending an upper end of the case to form the crimping portion such that it presses a sidewall of the protrusion of the cap assembly and fixes the cap assembly to the case.

According to an embodiment, the crimping portion is formed such that an end of the crimping portion is spaced from an upper surface of the cap assembly.

According to an embodiment, an end of the gasket may extend radially inward beyond the protrusion of the cap assembly and be disposed on an upper surface of the cap assembly.

According to embodiments of the present disclosure, a cylindrical secondary battery is provided in which no beading portion is formed, which makes discharging heat generated inside the secondary battery easier.

Also, by not forming a beading portion, a larger space can be provided inside the case of the secondary battery to accommodate the electrode assembly, which improves the energy density of the secondary battery.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a secondary battery according to an embodiment of the present disclosure.
FIG. 2 is a cross-sectional view illustrating an A-A section of FIG. 1.
FIG. 3 is a view illustrating an enlarged portion B of FIG. 2.
FIG. 4 illustrates an example of a cap assembly according to an embodiment of the present disclosure.
FIG. 5 illustrates a case having a beading portion in a comparative example and shows the pressing direction of a crimping portion.
FIG. 6 illustrates the pressing direction of a crimping portion according to an embodiment of the present disclosure.
FIG. 7 illustrates an example of a case according to an embodiment of the present disclosure.
FIG. 8 illustrates another example of a secondary battery according to an embodiment of the present disclosure.
FIG. 9 illustrates another example of a cap assembly according to an embodiment of the present disclosure.
FIG. 10 illustrates an example of a secondary battery including the cap assembly of FIG. 9.
FIG. 11 illustrates an example of a gasket according to an embodiment of the present disclosure.
FIG. 12 illustrates an example of a support member according to an embodiment of the present disclosure.
FIG. 13 is a flowchart of a method of manufacturing a secondary battery according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value less than or equal to 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked," or "connected" to each other, or another component may be "interposed" between the components."

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

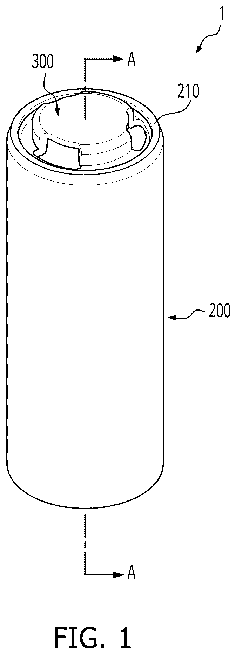

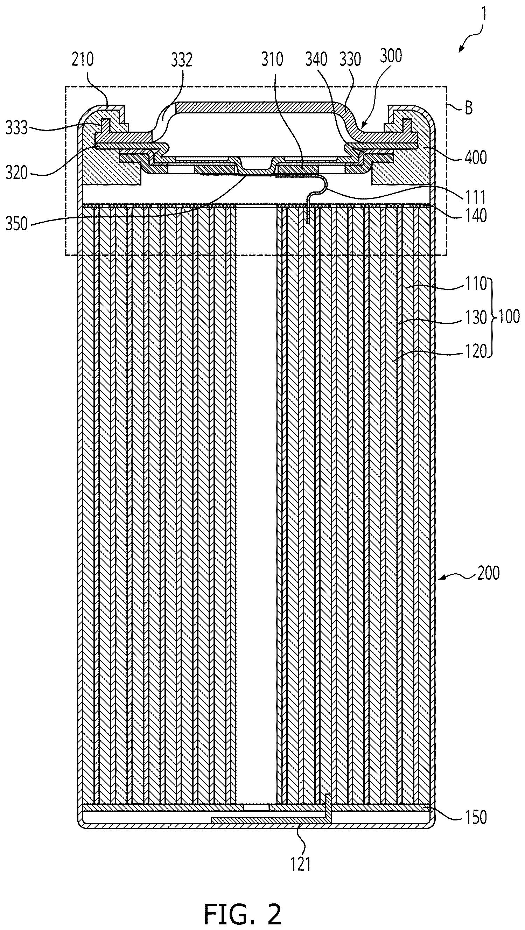

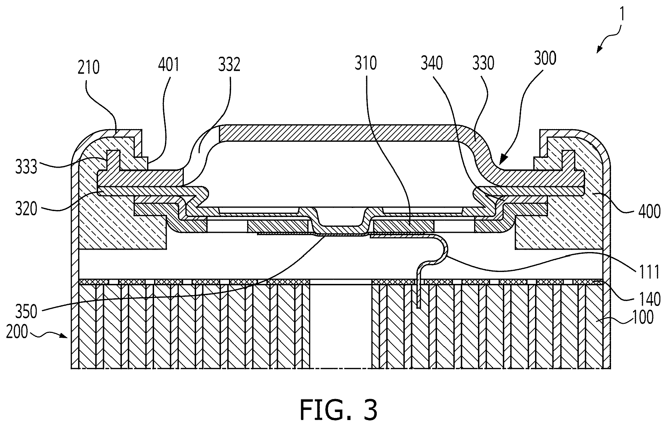

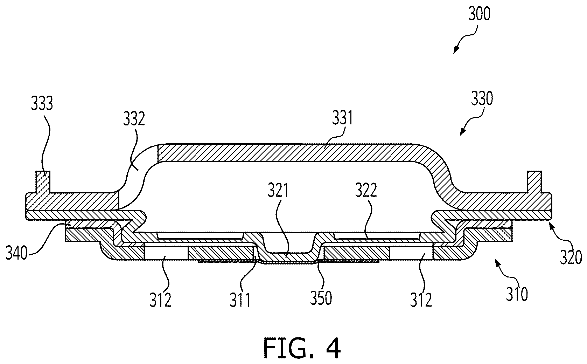

FIG. 1 illustrates a secondary battery 1 according to an embodiment of the present disclosure. FIG. 2 is a cross-sectional view illustrating an A-A section of FIG. 1. FIG. 3 is a view illustrating an enlarged portion B of FIG. 2. FIG. 4 illustrates an example of a cap assembly 300 according to an embodiment of the present disclosure.

Referring to FIGS. 1-4, a secondary battery 1 according to an embodiment of the present disclosure may include an electrode assembly 100, a case 200, a cap assembly 300, and a gasket 400.

The electrode assembly 100 may include a first electrode 110, a second electrode 120, and a separator 130. The first electrode 110 may be a positive electrode, and the second electrode 120 may be a negative electrode. Of course, the opposite arrangement is also possible. The electrode assembly 100 may be a wound-type electrode assembly 100 formed by winding the first electrode 110 and the second electrode 120 with the separator 130, which is an insulator, interposed between the first and second electrodes 110 and 120. But the present disclosure is not limited to these examples.

According to an embodiment, the first electrode 110 may include a coating portion where an active material is coated on both sides of a first substrate that is a thin metal plate. The first electrode 110 may also include an uncoated portion where the active material is not provided and the substrate is exposed. The first electrode 110 may include uncoated portions formed on both sides of the first substrate in the winding direction. The first electrode 110 may be formed by coating a transition metal oxide or the like as a positive active material on a metal substrate such as aluminum or an aluminum alloy to form a positive electrode.

The second electrode 120 may include a coating portion where an active material is coated on both sides of a second substrate that is a thin metal plate. The second electrode 120 may also include an uncoated portion where the active material is not coated and the substrate is exposed. The second electrode 120 may include uncoated portions formed on both sides of the second substrate in the winding direction. The second electrode 120 may be formed by coating a negative active material such as graphite or carbon on a metal substrate such as copper, a copper alloy, nickel, or a nickel alloy to form a negative electrode.

The separator 130 may be disposed between the first electrode 110 and the second electrode 120. The separator 130 may insulate between the first electrode 110 and the second electrode 120 but allow for the exchange of lithium ions between the first electrode 110 and the second electrode 120. The separator 130 may have a sufficient length so that the first electrode 110 and the second electrode 120 remain fully insulated even if the electrode assembly 100 shrinks or swells during charging and discharging of the secondary battery 1.

The electrode assembly 100 may further include a first electrode tab 111 and a second electrode tab 121. The first electrode tab 111 may be separately formed and connected to the uncoated portion of the first electrode 110, or the first electrode tab 111 may be formed by partially stamping out the uncoated portion. The first electrode tab 111 may extend upward from the uncoated portion and contact the cap assembly 300. But a configuration in which the first electrode tab 111 contacts the cap assembly 300 is only an example and the present disclosure is not limited thereto. With contact between the first electrode tab 111 and the cap assembly 300, the first electrode 110 may be electrically connected to the cap assembly 300. The second electrode tab 121 may be separately formed and connected to the uncoated portion of the second electrode 120, or the second electrode tab 121 may be formed by partially stamping out the uncoated portion. The second electrode tab 121 may extend downward from the uncoated portion and contact the case 200. But a configuration in which the second electrode tab 121 contacts the case 200 is only an example and the present disclosure is not limited thereto. With contact between the second electrode tab 121 and the case 200, the second electrode 120 may be electrically connected to the case 200.Further, while an example has been described in which the first electrode tab 111 is electrically connected to the cap assembly 300 and the second electrode tab 121 is electrically connected to the case 200, the opposite arrangement is also possible, and the present disclosure is not limited thereto.

According to an embodiment, the secondary battery 1 may further include an upper insulating member 140 disposed on a first surface of the electrode assembly 100 that faces the cap assembly 300. The electrode assembly may also include a lower insulating member 150 disposed on a second surface of the electrode assembly 100 that faces a bottom surface of the case 200.

The upper insulating member 140 may be disposed between the electrode assembly 100 and the cap assembly 300 to insulate components of the electrode assembly 100 other than the first electrode tab 111 from the cap assembly 300. The upper insulating member 140 may include a plurality of holes that allow an electrolyte to flow into the electrode assembly 100 and form pathways for discharging gas generated during charging and discharging. The first electrode tab 111 may pass through a hole formed in the upper insulating member 140 and be connected to the cap assembly 300, but the present is not limited to such a configuration.

The lower insulating member 150 may be disposed between the electrode assembly 100 and a bottom surface of the case 200 so as to insulate components of the electrode assembly 100 other than the second electrode tab 121 from the bottom surface of the case 200. The second electrode tab 121 may pass through a hole formed in the lower insulating member 150 to be connected to the case 200, but the present is not limited to such an arrangement.

The case 200 may form an external appearance of the secondary battery 1. For example, the case 200 maybe a cylindrical structure with one open side. The case 200 may be formed of stainless steel (SUS). In other examples, the case 200 may be formed of a conductive metal, such as aluminum, an aluminum alloy, or steel plated with nickel.

The electrode assembly may be inserted into the case 200 through the open side and thereby accommodated inside of the case. In a particular embodiment, the case 200 may have an upper portion open, opposite a bottom portion, through which a space for receiving the electrode assembly 100 is exposed. After the electrode assembly 100 is accommodated in the case 200, the open side of the case 200 may be covered by the cap assembly 300 to seal the electrode assembly 100.

The case 200 may be connected to the second electrode tab 121. For example, the second electrode tab 121 may be welded to a bottom portion of the case 200, but the present disclosure is not limited to such a configuration. The case 200 may be electrically connected to the second electrode 120 via the second electrode tab 121.

The case 200 may include a crimping portion 210 that surrounds a protrusion 333 extending upward along a perimeter of the cap assembly 300, with the crimping portion fixing the cap assembly 300. The gasket 400 may be interposed between the case 200 and the cap assembly 300 so as to surround the protrusion 333 formed along the perimeter of the cap assembly 300. With the gasket 400 interposed between the case 200 and the cap assembly 300, an upper end of the case 200 may be bent to form the crimping portion 210.

The crimping portion 210 may be formed to press in a direction towards the sidewall of the protrusion 333 of the cap assembly 300 with the gasket 400 interposed therebetween. In particular, the crimping portion 210 may press in a direction towards the sidewall of the protrusion 333 to fix the cap assembly 300. The crimping portion 210 may surround the cap assembly 300 and the gasket 400 to bring the case 200, the cap assembly 300, and the gasket 400 into contact with each other. The crimping portion 210 may be formed using a crimping jig. When formed, the crimping portion 210 may prevent the cap assembly 300 from detaching and prevent leakage of the electrolyte.

The cap assembly 300 may cover the open side of the case 200 and seal the electrode assembly 100 in the case 200. The outer side surface of the cap assembly 300 may be surrounded by the gasket 400, and the cap assembly 300 may be secured to the case 200 by the crimping portion 210.

The cap assembly 300 may include a protrusion 333 that extends upward along a perimeter of the cap assembly 300. For example, the protrusion 333 may be formed along the perimeter with a gap being formed between the outer diameter of the cap assembly 300 and the protrusion 333. The protrusion 333 may be formed along the perimeter of the outer diameter of the cap assembly 300. With the gasket 400 interposed, the protrusion 333 may be surrounded by the crimping portion 210 of the case 200. The sidewall of the protrusion 333 may be pressed by the crimping portion 210. More specifically, the crimping portion 210 may press the sidewall of the protrusion 333, and the cap assembly 300 may thereby be secured to the case 200.

The cap assembly 300 may be connected to the first electrode tab 111, and the cap assembly 300 may electrically connect the first electrode 110 via the first electrode tab 111. A lower end of the cap assembly 300 may be connected to the first electrode tab 111 inside the case 200, and an upper end of the cap assembly 300 may be connected to an external terminal.

The cap assembly 300 may include a lower cap 310, a vent 320, an upper cap 330, an insulating layer 340, and a sub-plate 350.

The lower cap 310 may be disposed below the vent 320. The lower cap 310 may be formed as a stepped structure in accordance with the shape of the vent 320. An insulating layer 340 may be placed on part of the outer upper surface of the lower cap 310 so as to insulate the vent 320. Part of the outer lower surface of the lower cap 310 may be in contact with the gasket 400.

The lower cap 310 may include an insertion hole 311 into which a center portion 321 of the vent 320 is inserted and a plurality of connection holes 312 formed spaced apart from the insertion hole 311.

The insertion hole 311 may be formed at the center of the lower cap 310 such that the center portion 321 of the vent 320 may be inserted into the insertion hole 311 with a gap between the center portion 321 and the wall of the insertion hole 311. A sub-plate 350 may be disposed under the lower cap 310. Through the sub-plate 350 disposed below the lower cap 310, the lower cap 310 and the vent 320 may be indirectly connected. The lower cap 310 and the vent 320 may be electrically connected to the first electrode 110 via the first electrode tab 111 connected to the sub-plate 350.

The connection holes 312 may be formed around the insertion hole 311. Gas generated inside the secondary battery 1 may be pass through the plurality of connection holes 312. A rupture portion 322 of the vent 320 may be positioned above each connection hole 312. In another embodiment, the rupture portions 322 of the vent 320 may be positioned offset from the connection hole 312s. During charging and discharging of the secondary battery 1, the electrolyte may decompose and thereby generate gas. The gas may be pass through the plurality of connection holes 312 formed in the lower cap 310. And the rupture portion 322 of the vent 320 may receive pressure from the gas passing through the connection holes 312 and may thereby rupture.

The vent 320 may be disposed above the lower cap 310. The vent 320 may be insulated from the lower cap 310 by the insulating layer 340 disposed on the outer upper surface of the lower cap 310. The vent 320 may be in contact with the outer lower surface of the upper cap 330. A gasket 400 may be interposed between the outer side of the vent 320 and the case 200 so that the vent 320 is insulated from the case 200.

The vent 320 may include a center portion 321 and a rupture portion 322. The center portion 321 may protrude downward at the center of the vent 320. The center portion 321 may be inserted into the insertion hole 311 formed at the center of the lower cap 310, with a gap remaining between the center portion 321 and the walls of the insertion hole 311. The center portion 321 of the vent 320 and a lower surface of the lower cap 310 may be indirectly connected through the sub-plate 350. The center portion 321 may be electrically connected to the first electrode 110 via the first electrode tab 111 that is connected to the sub-plate 350. as discussed above, the rupture portion 322 may be ruptured by gas passing through the plurality of connection holes 312. The rupture portion 322 may be formed with a thickness that corresponds to a pressure threshold of gas capable of causing rupture. The rupture portion 322 may be formed thin so as to rupture under the gas pressure. The rupture portion 322 may be formed spaced apart above each connection hole 312 or offset from each connection hole 312. When the rupture portion 322 ruptures, the center portion 321 may be separated from the lower cap 310 and the sub-plate 350. The vent 320 may be formed with a step so that it can be easily separated from the lower cap 310 and the sub-plate 350.

The upper cap 330 may be disposed above the vent 320. The upper cap 330 may protrude upward at its center with a step and be spaced apart from the vent 320. If the vent 320 ruptures, the center portion 321 of the vent 320 may be separated from the lower cap 310 and the sub-plate 350 and may move into the space between the upper cap 330 and the vent 320.

The upper cap 330 may include a terminal portion 331, a plurality of exhaust holes 332, and a protrusion 333.

The terminal portion 331 may be connected to an external terminal. The upper cap 330 may be electrically connected to the first electrode 110 via the first electrode tab 111, the sub-plate 350, the lower cap 310, and the vent 320. Thus, the upper cap 330 may function as the first electrode 110, and the terminal portion 331 may be connected to an external terminal.

The exhaust holes 332 may discharge the gas passing through the rupture portion 322 of the vent 320 (which ruptures due to the pressure of the gas). In other words, the rupture portion 322 of the vent 320 rupture due to the pressure of the gas and the exhaust holes 332 may discharge the gas.

The protrusion 333 may protrude upward along the perimeter of the upper cap 330. By way of example, the protrusion 333 may be formed along the perimeter at a position such that a gap is formed between the protrusion 333 and the outer diameter of the upper cap 330. In another embodiment, the protrusion 333 may be formed along the outer diameter of the upper cap 330. With the gasket 400 interposed, the protrusion 333 may be surrounded by the crimping portion 210 of the case 200. The sidewall of the protrusion 333 may be pressed by the crimping portion 210.

The insulating layer 340 may be disposed between the lower cap 310 and the vent 320. There is an indirect connection of the vent 320 and the lower cap 310 via the sub-plate 350, and the insulating layer 340 may be placed on the outer upper surface of the lower cap 310 so that the vent 320 and the lower cap 310 do not contact each other. Thus, the vent 320 and the lower cap 310 are insulated from each other.

The sub-plate 350 may be disposed below the lower cap 310. The sub-plate 350 may be connected to the lower cap 310 and the vent 320 below the lower cap 310, and the sub-plate 350 may be connected to the first electrode tab 111. The lower cap 310 and the vent 320 may be indirectly connected via the sub-plate 350. The lower cap 310 and the vent 320 may be electrically connected to the first electrode 110 via the first electrode tab 111 connected to the sub-plate 350.

The gasket 400 may surround the cap assembly 300 and be disposed between the case 200 and the cap assembly 300. The gasket 400 may be placed on one side of the case 200 in a ring shape. The gasket 400 may include an opening formed so that part of the cap assembly 300 (for example, the lower cap 310) can be inserted. The gasket 400 may electrically insulate the cap assembly 300, which is connected to the first electrode 110, from the case 200, which is connected to the second electrode 120. In addition, the gasket 400 may cushion against external impacts to protect the cap assembly 300.

The gasket 400 may surround the protrusion 333 of the cap assembly 300 and be interposed between the case 200 and the cap assembly 300. One end 401 of the gasket 400 may extend radially inward beyond the protrusion 333 of the cap assembly 300 and be positioned on an upper surface of the cap assembly 300. The end 401 of the gasket 400 may be interposed between an end of the crimping portion 210 of the case 200 and the upper surface of the cap assembly 300 so as to insulate between the case 200 and the cap assembly 300.

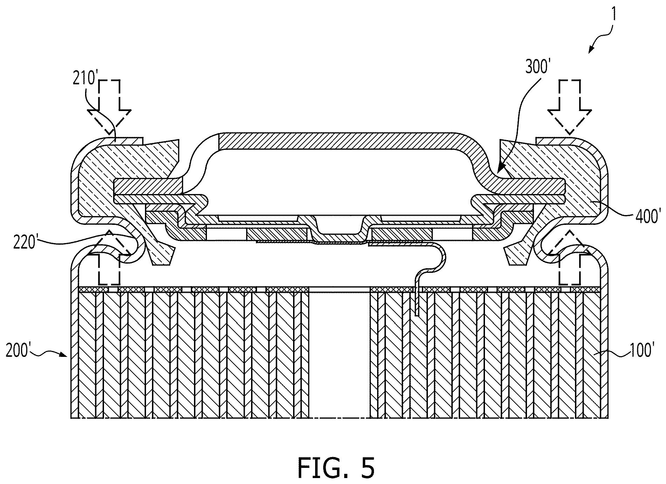

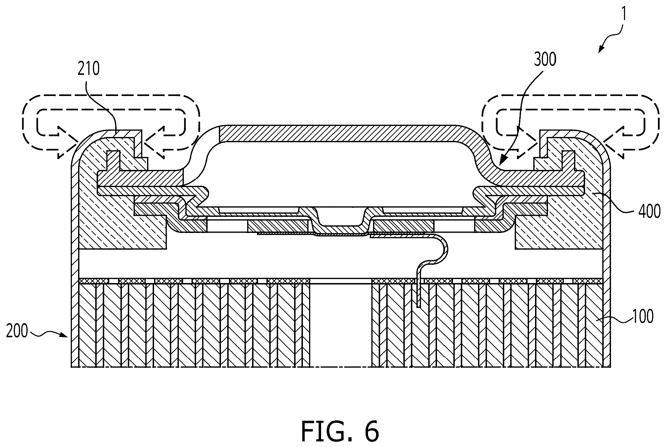

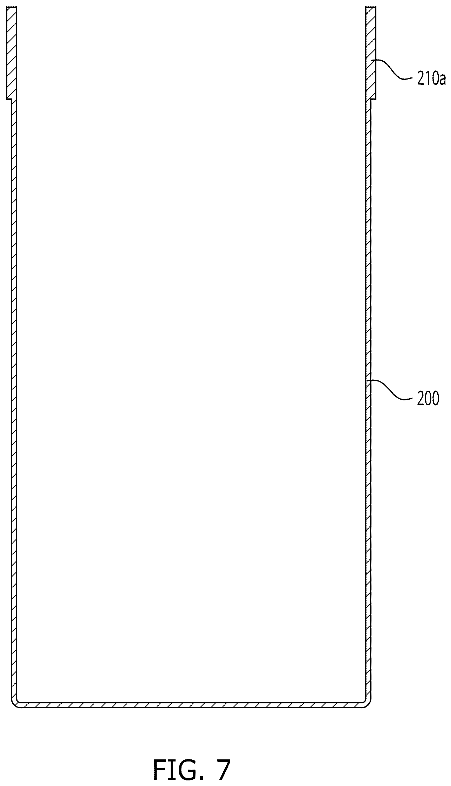

FIG. 5 shows a comparative example that includes a beading portion and shows the pressing direction of a clamping portion. FIG. 6 illustrates the pressing direction of a clamping portion according to an embodiment of the present disclosure. FIG. 7 illustrates an example of the case according to an embodiment of the present disclosure.

Referring to FIG. 5, in a comparative example, a case 200' may include a crimping portion 210' and a beading portion 220'. The beading portion 220' may be a curved groove formed inward of the case 200' so that a gasket 400' is seated at an upper end of the case 200'. The beading portion 220' may be formed by inwardly pressing the perimeter of the case 200' between the electrode assembly 100' and the gasket 400' so that the beading portion 200' is formed in the curved groove shape.

A crimping portion 210' may be formed by bending an upper end of the case 200' using a crimping jig so that the upper end of the case 200' surrounds the cap assembly 300'. For example, the crimping jig may be placed on the groove of the beading portion 220' and the upper end of the case 200' and may apply pressure up and down to form the crimping portion 220'.

Referring to FIG. 6, the crimping portion 210 may be formed in the case 200 by bending the upper end of the case 200 without forming the beading portion 220' as shown in FIG. 5. For example, the crimping jig may bend the upper end of the case 200 so that the upper end of the case 200 surrounds the protrusion 333 of the cap assembly 300 and forms the crimping portion 210 that presses the sidewall of the protrusion 333. The crimping portion 210 may press the sidewall of the protrusion 333 and secure the cap assembly 300. Thus, even without forming a beading portion, the cap assembly 300 may be secured to the case 200 by forming the crimping portion 210. By not forming a beading portion, more space can be used for accommodating the electrode assembly 100 inside the case 200, which thereby improves the energy density of the battery.

Referring to FIG. 7, the thickness of an upper end 210a of the case 200 according to an embodiment of the present disclosure may be thicker than other regions of the case 200. By making the upper end 210a of the case 200 thicker, the upper end 210a may be less susceptible to damage during the process of forming the crimping portion 210. As described with reference to FIG. 6, once the thicker upper end 210a is bent by a crimping jig, it may become the crimping portion 210 that presses the protrusion 333 of the cap assembly 300 (see FIG. 6).

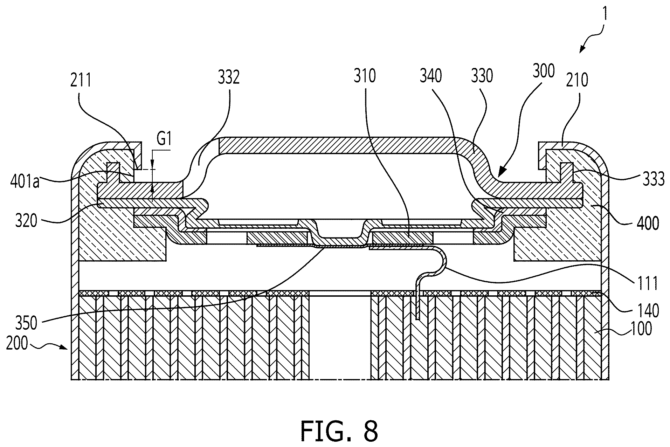

FIG. 8 illustrates another example of a secondary battery according to an embodiment of the present disclosure. Parts of the secondary battery that are different from the secondary battery shown in FIG. 3 will be described below.

Referring to FIG. 8, an end 401a of the gasket 400 according to an embodiment of the present disclosure may be disposed on the upper surface of the cap assembly 300. However, depending on the specifications of the gasket 400, the end 401a of the gasket 400 may not extend far enough radially inward beyond an end 211 of the crimping portion 210. To avoid a short circuit between the cap assembly 300 (which is electrically connected to the first electrode 110), and the case 200 (which is electrically connected to the second electrode 120), an end 211 of the crimping portion 210 may be spaced apart from the upper surface of the cap assembly 300. For example, the crimping portion 210 may be formed by bending an upper end of the case 200 so that the end 211 of the crimping portion 210 is spaced from the upper surface of the cap assembly 300 by a distance G1.

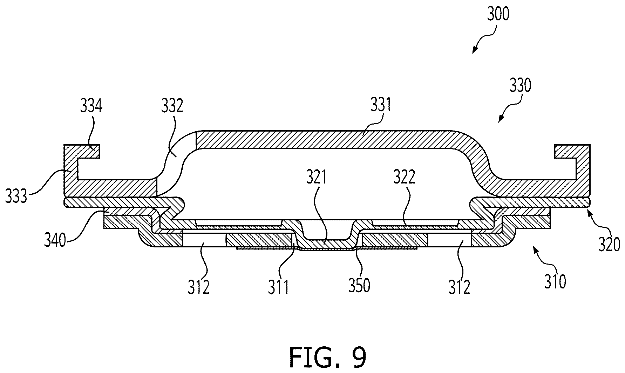

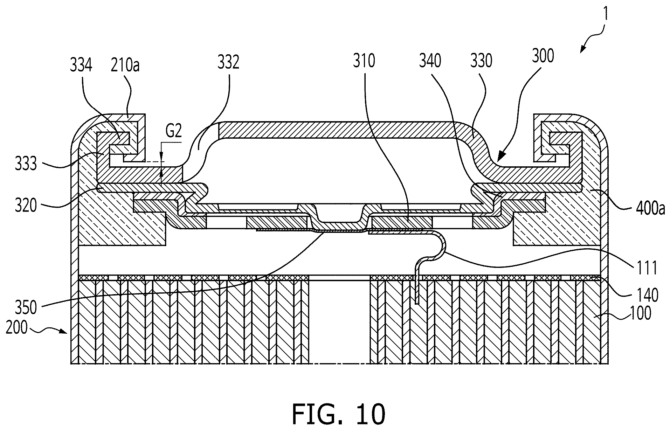

FIG. 9 illustrates another example of the cap assembly 300 according to an embodiment of the present disclosure. FIG. 10 illustrates an example of a secondary battery including the cap assembly of FIG. 9. Configurations of the cap assembly and secondary battery that are different from those shown in FIGS. 3 and 4 will be described below.

Referring to FIGS. 9 and 10, in an embodiment of the present disclosure, a protrusion 333 of the cap assembly 300 may protrude upward along the perimeter of the outer diameter of the cap assembly 300 (or along the perimeter of the outer diameter of the upper cap 330). The cap assembly 300 may further include a bent portion 334 that is bent radially inward an upper part of the protrusion 333.

According to an embodiment, a crimping portion 210a may be formed to surround the gasket 400a, the protrusion 333 of the cap assembly 300, and the bent portion 334. The gasket 400a may be interposed between the case 200 and the cap assembly 300. The crimping portion 210a may be formed by bending an upper end of the case 200 so that the protrusion 333 and the bending portion 334 are surrounded by the gasket 400a and the case 200. The crimping portion 210a may be formed a distance G2 from the upper surface of the cap assembly 300.

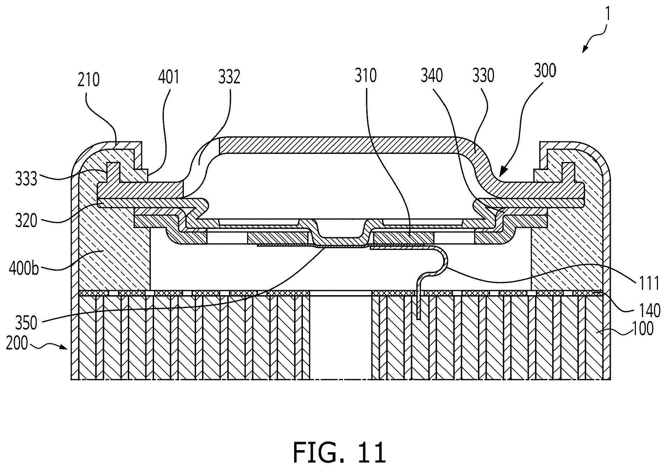

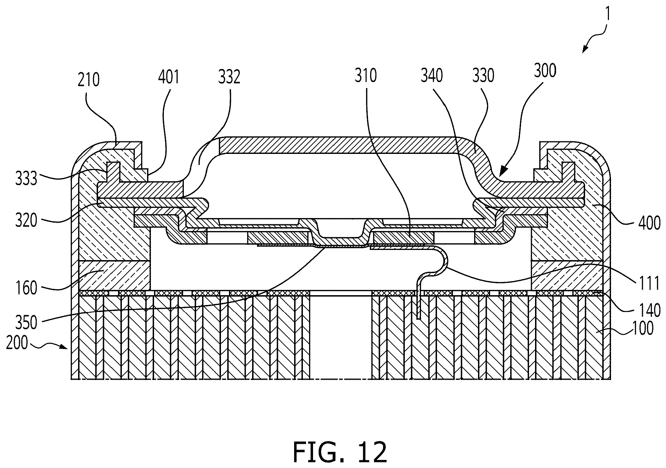

FIG. 11 illustrates an example of a gasket 400b according to an embodiment of the present disclosure. FIG. 12 illustrates an example of a support member 160 according to an embodiment of the present disclosure. Configurations of the secondary battery that are different from those shown in FIG. 3 will be described below.

Referring to FIG. 11, the gasket 400b according to an embodiment of the present disclosure may be disposed on a perimeter of the electrode assembly 100. In this configuration, the lower surface of the gasket 400b extends so that the gasket 400b can be disposed on the perimeter of the electrode assembly 100. After the gasket 400b is placed on the perimeter of the electrode assembly 100, the cap assembly 300 may be seated inside the internal space of the gasket 400b. For example, during the process of forming the crimping portion 210, the cap assembly 300 may be seated on the gasket 400b on the electrode assembly 100 without an additional device to secure the cap assembly 300 to an upper end of the case 200.

Referring to FIG. 12, a secondary battery 1 according to an embodiment of the present disclosure may further include a support member 160 that is disposed between the electrode assembly 100 and the gasket 400, with the support member 160 supporting the gasket 400. After the support member 160 is placed on the perimeter of the electrode assembly 100, the gasket 400 may be placed on the support member 160. In particular, the cap assembly 300 may be seated in an internal space of the gasket 400. As described above with reference to FIG. 11, during the process of forming the crimping portion 210, the cap assembly 300 may be seated on the gasket 400 on the support member 160 without the use of an additional device to secure the cap assembly 300 to the upper end of the case 200.

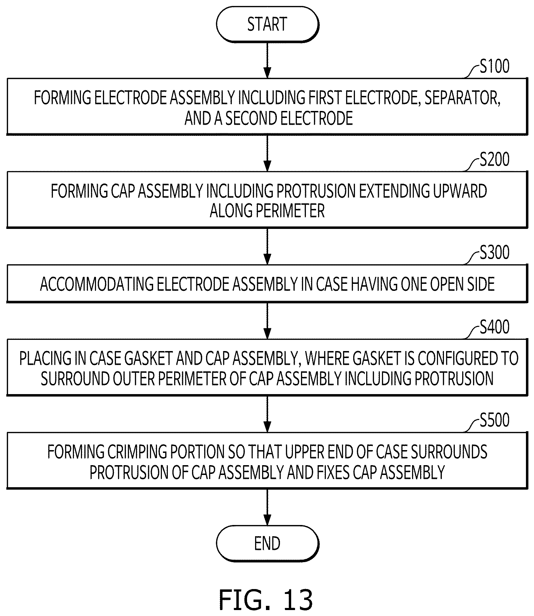

FIG. 13 is a flowchart of a method of manufacturing a secondary battery according to an embodiment of the present disclosure.

Referring to FIG. 13, a method of manufacturing a secondary battery according to another embodiment of the present disclosure may include forming an electrode assembly including a first electrode, a separator, and a second electrode (S100), forming a cap assembly that includes a protrusion extending upward along a perimeter (S200), accommodating the electrode assembly in a case having one open side (S300), placing in the case a gasket and the cap assembly, where the gasket is configured to surround an outer perimeter of the cap assembly including the protrusion (S400), and forming a crimping portion so that an upper end of the case surrounds the protrusion of the cap assembly and fixes the cap assembly (S500). Hereinafter, each step will be described in detail with reference to FIGs. 1-4.

In step S100, the electrode assembly 100 including a first electrode 110, a separator 130, and a second electrode 120 may be formed.

The electrode assembly 100 may include the first electrode 110, the second electrode 120, and the separator 130. The first electrode 110 may be a positive electrode, and the second electrode 120 may be a negative electrode. Of course, the opposite arrangement is also possible. For example, the electrode assembly 100 may be a wound-type electrode assembly 100 formed by winding the first electrode 110 and the second electrode 120 with the separator 130, which is an insulator, interposed therebetween, but the present disclosure is not limited thereto. The electrode assembly 100 may further include a first electrode tab 111 and a second electrode tab 121. The first electrode tab 111 may be separately formed and connected to the uncoated portion of the first electrode 110, or the uncoated portion may be stamped to form the first electrode tab 111. The second electrode tab 121 may be separately formed and connected to the uncoated portion of the second electrode 120, or the uncoated portion may be stamped to form the second electrode tab 121.

In step S200, the cap assembly 300 that includes a protrusion 333 extending upward along the perimeter of the cap assembly 300 may be formed. By way of example, the protrusion 333 may be formed along the perimeter inward from the outer diameter of the cap assembly 300 such that a gap is formed between the protrusion 333 and the outer diameter of the cap assembly 300. According to another embodiment, the protrusion 333 is formed along the perimeter of the outer diameter of the cap assembly 300..

In step S300, the electrode assembly 100 may be accommodated in the case 200. The case 200 may have an opening through which the electrode assembly 100 is inserted into the case 200. For example, the upper portion of the case 200, opposite to the bottom portion, may be open, thereby exposing a space for receiving the electrode assembly 100. Once the electrode assembly 100 is accommodated in the case 200, the second electrode tab 121 may be connected to the case 200. For example, the second electrode tab 121 may be welded to the bottom portion of the case 200, but the present disclosure is not limited to such an arrangement. The case 200 may be electrically connected to the second electrode 120 via the second electrode tab 121.

In step S400, the gasket 400 and the cap assembly 300, which are configured so that the gasket 400 surrounds the outer perimeter of the cap assembly 300 including the protrusion 333, may be provided to the case 200. The gasket 400 may be disposed between the case 200 and the cap assembly 300. The gasket 400 may be in a ring shape and placed on one side of the case 200. The gasket 400 may include an opening formed so that part of the cap assembly 300 (for example, the lower cap 310) can be inserted into the case 200. By way of example, after placing the gasket 400 on a perimeter of the electrode assembly 100, the cap assembly 300 may be seated inside the internal space of the gasket 400. According to another embodiment, a support member 160 (see FIG. 12) may be disposed on the electrode assembly 100, and the gasket 400 may be placed on the support member 160. And the cap assembly 300 may be seated in the internal space of the gasket 400.

The cap assembly 300 may be arranged to cover the open side of the case 200. The cap assembly 300 may cover the opening of the case 200 and seal the electrode assembly 100. The cap assembly 300 may be connected to the first electrode tab 111, and the cap assembly 300 may be electrically connected to the first electrode 110 via the first electrode tab 111. The lower end of the cap assembly 300 may be connected to the first electrode tab 111 inside the case 200.

In step S500, a crimping portion 210 may be formed so that the upper end of the case 200 surrounds the protrusion 333 of the cap assembly 300 and fixes the cap assembly 300. For example, with the gasket 400 interposed between the case 200 and the cap assembly 300, and the gasket 400 surrounding the protrusion 333 of the cap assembly 300, the upper end of the case 200 may be bent to form the crimping portion 210. The crimping portion 210 may be formed to press the sidewall of the protrusion 333 of the cap assembly 300 with the gasket 400 interposed therebetween. The crimping portion 210 may be formed by bending the upper end of the case 200 so that it presses the sidewall of the protrusion 333 of the cap assembly 300 and fixes the cap assembly 300. The crimping portion 210 may surround the cap assembly 300 and the gasket 400, bringing the case 200, the cap assembly 300, and the gasket 400 into contact with each other. The crimping portion 210 may be formed using a crimping jig. The crimping portion 210 may prevent the cap assembly 300 from separating from the case 200 and prevent leakage of the electrolyte.

The crimping portion 210 may be formed so that an end of the crimping portion 210 is spaced apart from an upper surface of the cap assembly 300. To avoid a short circuit between the cap assembly 300 (which is electrically connected to the first electrode 110) and the case 200 (which is electrically connected to the second electrode 120), an end of the crimping portion 210 may be formed spaced apart from the upper surface of the cap assembly 300.

One end of the gasket 400 may extend radially inward beyond the protrusion 333 of the cap assembly 300 and be placed on the upper surface of the cap assembly 300. For example, during the process of forming the crimping portion 210, an end of the gasket 400 may be bent together with the upper end of the case 200 to surround the protrusion 333 of the cap assembly 300. The bent end of the gasket 400 so as to be disposed on the upper surface of the cap assembly 300 and interposed between an end of the crimping portion 210 of the case 200 and the upper surface of the cap assembly 300. Accordingly, the gasket 400 may insulate between the case 200 and the cap assembly 300.

Although the present disclosure has been described above with respect to embodiments thereof, the present disclosure is not limited thereto. Various modifications and variations can be made thereto by those skilled in the art within the spirit of the present disclosure.

### <Description of Reference Symbols>

1: secondary battery
100: electrode assembly
110: first electrode
111: first electrode tab
120: second electrode
121: second electrode tab
130: separator
140: upper insulating member
150: lower insulating member
200: case
210: crimping portion
300: cap assembly
310: lower cap
320: vent
330: upper cap
333: protrusion
340: insulating layer
350: sub-plate
400: gasket

## Claims

1. A secondary battery (1) comprising:
a case (200) having an opening formed therein;
an electrode assembly (100) accommodated in the case (200), the electrode assembly (100) including a first electrode (110), a separator (130), and a second electrode (120), with the first electrode (110) being electrically connected to the case (200);
a cap assembly (300) sealing the opening formed in the case (200), the cap assembly (300) being electrically connected to the second electrode (120); and
a gasket (400) interposed between the case (200) and the cap assembly (300),
wherein the cap assembly (300) comprises a protrusion (333) that extends upward along a perimeter of the cap assembly (300), and
wherein the case (200) comprises a crimping portion (210) that surrounds the protrusion (333) and fixes the cap assembly (300) to the case (200).

2. The secondary battery (1) as claimed in claim 1, wherein the protrusion (333) is formed radially inward from an outer diameter of the cap assembly (300) such that a gap is formed between the protrusion (333) and the outer diameter of the cap assembly (300).

3. The secondary battery (1) as claimed in claims 1 or 2, wherein the cap assembly (300) further comprises a bent portion (334) that is bent radially inward from an end of the protrusion (333).

4. The secondary battery (1) of any one of the preceding claims, wherein the crimping portion (210) presses a sidewall of the protrusion (333) and fixes the cap assembly (300) to the case (200).

5. The secondary battery (1) as claimed in claim 4, wherein a thickness of the crimping portion (210) that presses the sidewall of the protrusion (333) is thicker than other regions of the case (200).

6. The secondary battery (1) of any one of the preceding claims, wherein an end of the crimping portion (210) is spaced from an upper surface of the cap assembly (300).

7. The secondary battery (1) of any one of the preceding claims, wherein an end of the gasket (400) extends radially inward beyond the protrusion (333) of the cap assembly (300) and is disposed on an upper surface of the cap assembly (300).

8. The secondary battery (1) as claimed in claim 7, wherein an end of the gasket (400) is interposed between an end of the crimping portion (210) and the upper surface of the cap assembly (300).

9. The secondary battery (1) of any one of the preceding claims, wherein the gasket (400) is disposed on a perimeter of the electrode assembly (100).

10. The secondary battery (1) of any one of the preceding claims, further comprising a support member (160) disposed between the electrode assembly (100) and the gasket (400), with the support member (160) supporting the gasket (400).

11. The secondary battery (1) of any one of the preceding claims, wherein the cap assembly (300) comprises:
a vent (320) that is deformable by gas pressure;
an upper cap (330) disposed above the vent (320) and connected to an external terminal;
a lower cap (310) disposed below the vent (320);
an insulating layer (340) disposed between the lower cap (310) and the vent (320); and
a sub-plate (350) disposed below the lower cap (310) and connected to the vent (320) and the lower cap (310),
wherein the upper cap (330) comprises the protrusion (333) that extends upward along a perimeter of the upper cap (330).

12. The secondary battery (1) as claimed in claim 11, wherein the vent (320) comprises:
a center portion (321) that protrudes downward and contacts the sub-plate (350); and
a rupture portion (322) that is configured to rupture by pressure from a gas passing through a plurality of connection holes (312) in the lower cap (310).

13. The secondary battery (1) of any one of the preceding claims 11 or 12, wherein an insertion hole (311) is formed in the lower cap (310), and the center portion (321) of the vent (320) is inserted in the insertion hole (311), and wherein a plurality of connection holes (312) are formed around the insertion hole (311).

14. The secondary battery (1) of any one of the preceding claims 11 to 13, wherein the upper cap (330) comprises a plurality of exhaust holes (332) configured to discharge gas passing through a rupture portion (322) of the vent (320) that is configured to rupture by gas pressure.

15. The secondary battery (1) of any one of the preceding claims, further comprising:
an upper insulating member (140) disposed on a first surface of the electrode assembly (100) and facing the cap assembly (300); and
a lower insulating member (150) disposed on a second surface of the electrode assembly (100) and facing a bottom surface of the case (200).
